# EUROPÄISCHE PATENTSCHRIFT

(11) **EP 3 398 744 B1**
(45) Veröffentlichungstag und Bekanntmachung des Hinweises auf die Patenterteilung: **29.01.2020**
(21) Anmeldenummer: 17169384.9
(22) Anmeldetag: 04.05.2017
(51) Int. Cl.: B27K 3/02, B27K 3/34, B27M 1/00, B27K 3/15, C08L 91/00, C08L 97/02

(54) **IMPRÄGNIERVERFAHREN FÜR HOLZSCHWELLEN UND IMPRÄGNIERTE HOLZSCHWELLE**
IMPREGNATING METHOD FOR WOODEN SLEEPERS AND IMPREGNATED WOODEN SLEEPER
PROCÉDÉ D'IMPRÉGNATION POUR SEUIL EN BOIS ET SEUIL EN BOIS IMPRÉGNÉ

(43) Veröffentlichungstag der Anmeldung: 07.11.2018
(73) Patentinhaber: Fürstenberg-THP GmbH, 92318 Neumarkt (DE)
(72) Erfinder: Marx, Hans Norbert, 77815 Bühl-Vimbuch (DE); Heidel, Andreas, 78187 Geisingen (DE)
(74) Vertreter: Westphal, Mussgnug & Partner Patentanwälte mbB

(56) Entgegenhaltungen:
- EP-A1- 0 191 276
- WO-A1-2011/038747
- GB-A- 1 310 781

## Beschreibung

Holzschwellen spielen weiterhin insbesondere im Gleisbau eine wichtige Rolle. Sie haben bei Streckengeschwindigkeiten unterhalb von 160 km/h hervorragende Eigenschaften im Hinblick auf Erschütterungen, Schall- und Lärmbelästigung, leicht bearbeitbar, durch ihre Elastizität, die zudem noch eine hohe Laufruhe erbringt und auf Radreifen und Lager des Rollmaterials im Vergleich zu Betonschwellen äußerst schonend wirkt, robust und wenig bruchempfindlich und können wegen ihres relativ geringen Gewichts leicht verlegt werden. Hinzu kommt ihre gute Ökobilanz.

Getrübt wird diese gute Ökobilanz allerdings durch die bislang übliche Imprägnierung des Holzes, für die in der Regel Steinkohlenteeröle (Kreosot) verwendet wird. Diese enthalten Bestandteile mit krebserzeugender Wirkung, insbesondere Benzo[a]pyren, was inzwischen zum partiellen Verbot dieser Substanzen und zu einer Modifikation der verwendeten Steinkohlenteeröle geführt hat. Dennoch ist bislang ein mit vergleichbarer Wirkung bei einer Vielzahl von Holzarten einsetzbares Imprägniermittel noch nicht gefunden.

Die WO 2011/038747 A1 offenbart ein Imprägnierverfahren für Holzschwellen, bei dem als Imprägniermittel Kupfer- und/oder zinkhaltiges Imprägniermittel verwendet wird, bei dem Kupfer und/oder Zink als Seife von Fettsäuren aus naturstämmigen Ölen als Biozid vorliegt.

Aus der US 1,310,781 ist es bekannt, einen Holzpfahl zur Verbesserung seiner Imprägnierung mit einer Schlitzperforation zu versehen, bei der die Schlitze im Wesentlichen parallel zur Verlaufsrichtung der Holzfasern ausgerichtet sind.

Aus der EP 010 191 276 ist es bekannt, die Verbesserung des Imprägnierergebnisses eines Holzteils durch das Vorsehen von Sacklöchern zu verbessern.

Die Aufgabe der Erfindung besteht daher darin, ein Imprägnierverfahren für Holzschwellen und eine imprägnierte Holzschwelle bereitzustellen, die eine gute Schutzwirkung bei gleichzeitiger Verbesserung der Eigenschaften der Holzschwelle und ihrer Ökobilanz aufweisen.

Diese Aufgabe wird gelöst durch ein Imprägnierverfahren für Holzschwellen mit den Merkmalen des Patentanspruchs 1 und eine imprägnierte Holzschwelle mit den Merkmalen des Patentanspruchs 8. Vorteilhafte Weiterbildungen der Erfindung sind Gegenstand der abhängigen Patentansprüche.

Bei dem erfindungsgemäßen Imprägnierverfahren für Holzschwellen wird die Holzschwelle einer ersten mechanischen Behandlung unterzogen, bei der im Wesentlichen eine Verschiebung von Holzfasern bewirkt wird, einer zweiten mechanischen Behandlung unterzogen, bei der im Wesentlichen Teile von Holzfasern durchtrennt werden und als Imprägniermittel ein wasser- und lösemittelfreies, kupfer- und/oder zinkhaltiges Imprägniermittel verwendet wird, bei dem Kupfer und/oder Zink als Seife von Fettsäuren aus naturstämmigen Ölen als Biozid vorliegt.

Ein solches Imprägniermittel wird bevorzugt frei von organischen Lösemitteln, Teeröl und/oder Teerölbestandteilen bereitgestellt.

Das Imprägniermittel wird nach beiden mechanischen Behandlungsschritten, vorzugsweise mit einem üblichen Kesseldruckverfahren, z.B. bei 10 bar über mehrere Stunden hinweg, in die Holzschwelle eingebracht. Die Reihenfolge der mechanischen Behandlungen ist beliebig; insofern sind die Begriffe "erste mechanische Behandlung" und "zweite mechanische Behandlung" nicht im Sinne einer vorgeschriebenen Reihenfolge zu verstehen, sondern kategorisierend.

Durch das erfindungsgemäße Imprägnierverfahren wird es möglich, für Holzschwellen aus unterschiedlichsten Holzarten ein wirksames, aber deutlich umweltverträglicheres und unkritisch handhabbares Imprägniermittel einzusetzen, das noch zudem emissionsarm und insbesondere sehr geruchsarm ist und somit auch den Einsatz so imprägnierter Schwellen in Tunneln und auch bei U-Bahnen erlaubt. Insbesondere weist eine erfindungsgemäß imprägnierte Holzschwelle keinen messbaren Dampfdruck mehr auf.

Zudem werden im Gegensatz zu den bekannten, teerölimprägnierten Schwellen Schotter und Planum des Oberbaus durch die erfindungsgemäße Schwelle nicht mehr kontaminiert.

Gleichzeitig tragen die verschiedenen mechanischen Behandlungen nicht nur zu einer hervorragenden Penetration und Distribution des erfindungsgemäßen Imprägniermittels bei, sondern auch zu einer schnellen, gleichmäßigen, riss- und spannungsarmen Trocknung der Holzschwellen.

Die Entwicklungsarbeiten der Anmelderin haben gezeigt, dass die Kombination der unterschiedlichen mechanischen Behandlungen und des speziellen Imprägniermittels sehr wichtig ist, um eine so wirksame Imprägnierung möglich werden zu lassen, wie sie das erfindungsgemäße Verfahren erreicht. Die mechanische Behandlung, die zu einer Verschiebung der Fasern, z.B. dadurch, dass diese lokal auseinandergedrückt werden, vergrößert die für den Zutritt des Imprägniermittels verfügbare Oberfläche, während das Durchtrennen der Holzfasern ein leichtes Eindringen des Imprägniermittels in das Holzvolumen ermöglicht.

Man erhält mit den so imprägnierten Holzschwellen leicht handhabbare haltbare Schwellen mit geringer elektrischer Leitfähigkeit, hoher Elastizität bzw. Achslastresistenz, großer Laufruhe und langer Gebrauchsdauer. Nach Ablauf derselben ist eine unbeschränkte Zweitnutzung oder eine verbesserte Entsorgung möglich.

Die erste mechanische Behandlung ist erfindungsgemäß bevorzugt eine Schlitzperforation , bei der die Schlitze im Wesentlichen parallel zur Verlaufsrichtung der Holzfasern ausgerichtet sind, so dass im Wesentlichen Holzfasern verschoben werden, wobei diese mechanische Behandlung zumindest auf die vier großen Seitenflächen des im Wesentlichen quaderförmigen Schwellenkörpers angewendet wird.

Eine solche Schlitzperforation lässt sich beispielsweise maschinell mit Maschinen erzeugen, wie sie für das in den USA übliche "incising" von Holzschwellen verwendet werden. Bei den üblichen Dimensionen einer Holzschwelle für den Einsatz im Bahnbereich sollte dabei bevorzugt die Schlitztiefe mindestens 20 mm betragen.

Die zweite mechanische Behandlung, bei der Holzfasern bzw. Abschnitte von Holzfasern durchtrennt werden, ist erfindungsgemäß ein Einbringen von Sackloch-Bohrungen von mindestens einer Seite der Holzschwelle her. Bevorzugt ist es dabei, diese Bohrungen von genau einer Seite der Holzschwelle her, insbesondere von der Seite der Holzschwelle her, die später die dem Boden zugewandte Unterseite der Holzschwelle bilden soll, einzubringen, da dadurch Niederschlagseinwirkungen minimiert werden können.

Insbesondere zeigt sich überraschenderweise, dass im Rahmen des erfindungsgemäßen Verfahrens die die Holzfasern durchtrennende mechanische Behandlung bereits dann das erreichte Imprägnierergebnis deutlich verbessert, wenn sie nur lokal vorgenommen wird. Sehr gute Ergebnisse werden insbesondere bereits dann erreicht, wenn diese mechanische Behandlung so ausgeführt wird, dass an zwei Stellen der Schwelle jeweils eine Gruppe von etwa 20 bis 40 Sackbohrungen, die zueinander versetzt sind, eingebracht werden.

Bei den üblichen Dimensionen einer Holzschwelle für den Einsatz im Bahnbereich hat es sich als besonders vorteilhaft erwiesen, wenn die Sackloch-Bohrungen eine Tiefe zwischen etwa 4/5 und 7/8 der Ausdehnung der Holzschwelle in Verlaufsrichtung der Sackloch-Bohrungen haben. Bevorzugt sind Durchmesser zwischen 3 mm und 8 mm. Die Bohrungen müssen nicht gleichmäßig über die Holzschwelle verteilt sein, sondern können auch an einigen Stellen konzentriert werden.

Für das Imprägniermittel Fettsäuren aus naturstämmigen Ölen verwendet, die oxydativ trocknen und die Wasserunlöslichkeit des Imprägniermittels verbessern. Diese Eigenschaft ist insbesondere gegeben, wenn die Fettsäure trocknende Gruppen mit Mehrfachbindungen aufweist. Beispiele für solche Fettsäuren sind unter anderem Leinöl-, Sojaöl-, Tallöl-, Fischöl-, Cottonöl- oder Erdnussölfettsäuren. Mit einem derart optimierten Imprägniermittel wird zugleich die Fixierung des Imprägniermittels an der Holzfaser verbessert.

Besonders gut geeignet ist ein Imprägniermittel, wenn sein Metallgehalt des Imprägniermittels 2-5%, bezogen auf das Metall, ist. Bevorzugt werden zwischen 30kg/m³ und 100kg/m³ Imprägniermittel pro Kubikmeter Holz eingebracht.

Besonders bevorzugt ist die Verwendung eines Imprägniermittels, das außer Kupfer und/oder Zink als Seife von Fettsäuren aus naturstämmigen Ölen als Basis-Biozid ein oder mehrere Co-Biozide zur Erweiterung des Wirkungsspektrums und/oder zur Erhöhung der Wirkungstiefe aufweist.

Dementsprechend weist die erfindungsgemäße imprägnierte Holzschwelle, wobei die imprägnierte Holzschwelle erste Bereiche aufweist, in denen Holzfasern verschoben sind, wobei die imprägnierte Holzschwelle zweite Bereiche aufweist, in denen Teile von Holzfasern durchtrennt sind und wobei die imprägnierte Holzschwelle mit einem wasser- und lösemittelfreien, kupferhaltigen, naturstämmigen Öl imprägniert ist.

Die ersten Bereiche sind Schlitze, die im Wesentlichen parallel zur Verlaufsrichtung der Holzfasern ausgerichtet und von allen Seiten in Oberflächen der imprägnierten Holzschwelle eingebracht sind, sind. Bevorzugt ist dabei die Schlitztiefe mindestens 20 mm.

Die zweiten Bereiche Sackloch-Bohrungen, die von mindestens einer Seite der Schwelle her eingebracht sind. Die Seite sollte dabei diejenige sein, die bei der späteren Verwendung der Schiene nach unten weist, um Niederschlagseinwirkungen zu minimieren.

Besonders bevorzugt sind Sackloch-Bohrungen mit einer Tiefe von etwa 4/5 bis 7/8 der Ausdehnung der Holzschwelle in Verlaufsrichtung der Sackloch-Bohrungen. Die Sackloch-Bohrungen haben bevorzugt einen Durchmesser zwischen 3 mm und 8 mm.

Besonders bevorzugt ist es, wenn die Sackloch-Bohrungen in Paketen oder Gruppen und nur in Teilbereichen der Schwelle angeordnet sind. Insbesondere hat es sich bei den Entwicklungsarbeiten der Anmelderin bewährt, wenn die Schwelle zwei Gruppen von jeweils etwa 20 bis 40 zueinander versetzten Bohrungen aufweist.

Die erfindungsgemäße Klasse von Imprägniermitteln für die imprägnierte Holzschwelle sind solche, die Fettsäuren aus naturstämmigen Ölen enthalten, die oxydativ trocknen und die Wasserunlöslichkeit des Imprägniermittels verbessern. Diese Eigenschaft ist insbesondere gegeben, wenn die Fettsäure trocknende Gruppen mit Mehrfachbindungen aufweist. Mit einem derart optimierten Imprägniermittel wird zugleich die Fixierung des Imprägniermittels an der Holzfaser verbessert.

Bevorzugt ist dabei insbesondere ein Metallgehalt des Imprägniermittels von 2-5%, bezogen auf das Metall.

Die Erfindung wird nun anhand von Figuren, die exemplarische Ausführungsbeispiele von Aspekten der Erfindung zeigen, näher erläutert. Es zeigt:
- Fig. 1a:: eine Ansicht einer Holzschwelle, die mit der ersten mechanischen Behandlung behandelt ist,
- Fig. 1b:: eine Aufsicht auf einen Teil einer ersten Oberfläche der Holzschwelle aus Figur 1a,
- Fig. 1c:: eine Aufsicht auf einen Teil einer zweiten Oberfläche der Holzschwelle aus Figur 1a,
- Fig. 1d:: eine Detaildarstellung eines bei der ersten mechanischen Behandlung erzeugten Schlitzes, und
- Fig. 2a:: eine Ansicht einer Unterseite einer Holzschwelle, die mit der zweiten mechanischen Behandlung behandelt ist, und
- Fig. 2b:: einen in Längsrichtung der Holzschwelle orientierten Querschnitt durch die Holzschwelle aus Figur 2a.

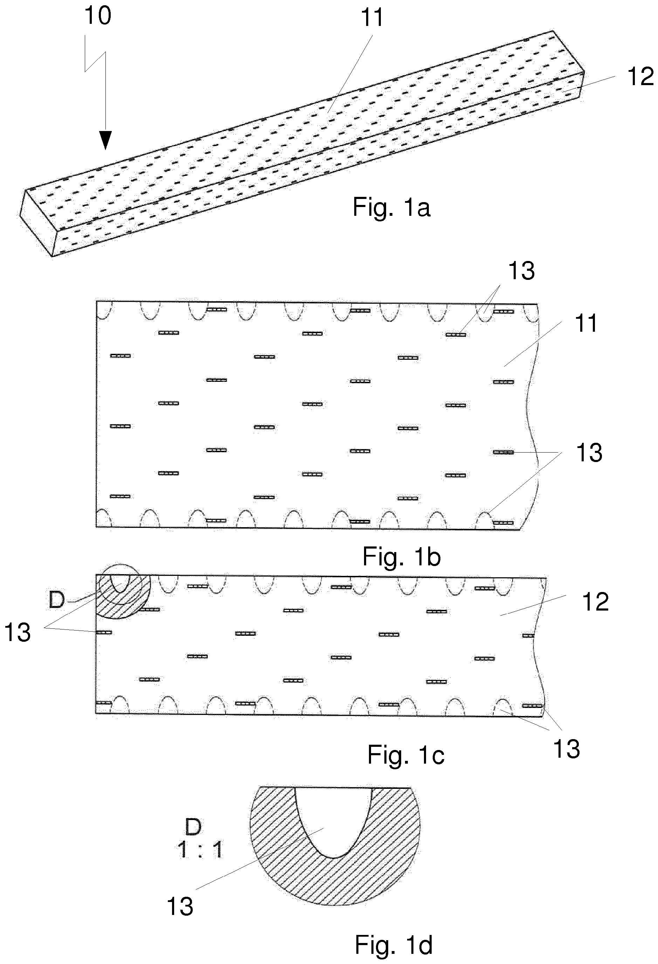

Figur 1a zeigt zur Veranschaulichung der ersten mechanischen Behandlung eine Holzschwelle 10, in deren 4 größte Oberflächen, von denen in der Figur nur die beiden Oberflächen 11,12 sichtbar sind, eine Schlitzperforation eingebracht wurde. Wie man in den Aufsichten auf die Oberflächen 11 bzw. 12 erkennt, verlaufen die Schlitze 13 im Wesentlichen parallel zur in den Figuren nicht gezeigten Verlaufsrichtung der Holzfasern und sind auf jeder der Oberflächen 11,12 jeweils zeilen- und spaltenartig so angeordnet, dass in den oben und unten zu einer gegebenen Zeile befindlichen Zeilen sowie in den rechts und links zu einer gegebenen Spalte befindlichen Spalten Schlitze 13 nicht unmittelbar benachbart zueinander angeordnet sind.

Strichliert dargestellt ist in den Figuren 1b und 1c jeweils der Verlauf von Schlitzen 13, die unterhalb der betrachteten Oberfläche 11 bzw. 12 von der Seite her in die Holzschwelle 10 eingebracht sind. In der Figur 1c ist zur Veranschaulichung im schraffierten Bereich (in dem die Schraffur zur Markierung dient und keinen Verlauf von Holzfasern darstellen soll) ein solcher Schlitz 13 freigelegt und in Figur 1d vergrößert dargestellt.

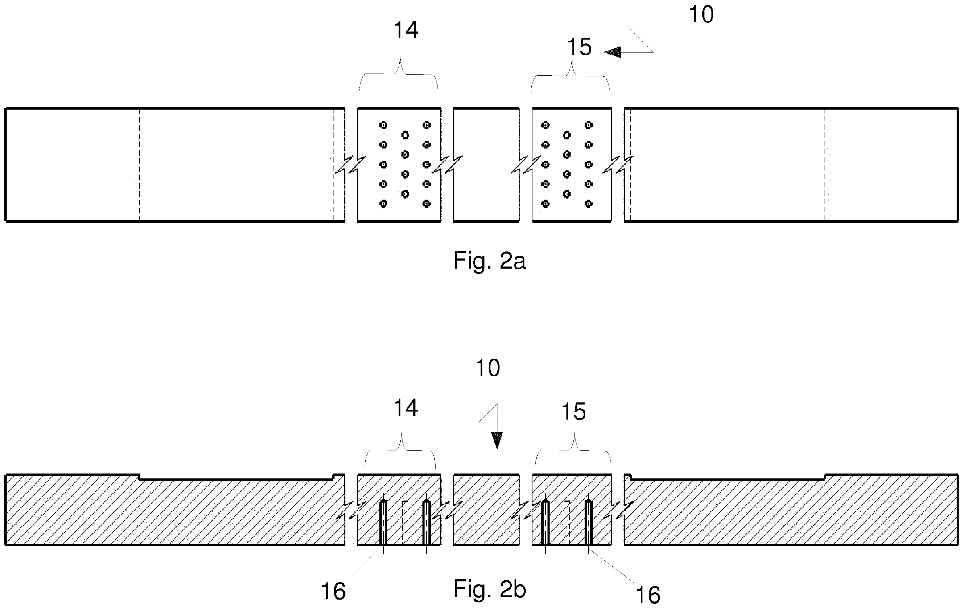

Figur 2 a und b zeigen zur Veranschaulichung der zweiten mechanischen Behandlung eine Holzschwelle 10, in der in zwei Bereichen 14, 15 jeweils ein Feld von jeweils 14 Sackloch-Bohrungen 16 mit einem Durchmesser von 3-4 mm bis in eine Tiefe von 4/5 der Schwellentiefe eingebracht sind.

### Bezugszeichenliste

- 10: Holzschwelle
- 11,12: Oberfläche
- 13: Schlitz
- 14,15: Bereich
- 16: Sackloch-Bohrung
- D: Detail

## Patentansprüche

1. Imprägnierverfahren für Holzschwellen (10), bei dem die Holzschwelle (10) einer ersten mechanischen Behandlung unterzogen wird, nämlich einer Schlitzperforation wenigstens der vier größten Oberflächen (11, 12) der Holzschwelle (10) ist, bei der Schlitze (13) im Wesentlichen parallel zur Verlaufsrichtung der Holzfasern ausgerichtet sind, so dass eine Verschiebung von Holzfasern (10) bewirkt wird, bei dem die Holzschwelle (10) einer zweiten mechanischen Behandlung unterzogen wird, nämlich einem zumindest lokales Einbringen von Sackloch-Bohrungen (16) von mindestens einer Seite der Holzschwelle (10) her, im Wesentlichen Holzfasern durchtrennt werden, und bei dem als Imprägniermittel ein wasser- und lösemittelfreies, kupfer- und/oder zinkhaltiges Imprägniermittel verwendet wird, bei dem Kupfer und/oder Zink als Seife von Fettsäuren aus naturstämmigen Ölen, die oxydativ trocknen, als Biozid vorliegt.

2. Imprägnierverfahren nach Anspruch 2,
**dadurch gekennzeichnet, dass** die Schlitztiefe mindestens 20 mm beträgt.

3. Imprägnierverfahren nach Anspruch 1 oder 2,
**dadurch gekennzeichnet, dass** die Sackloch-Bohrungen (16) eine Tiefe zwischen etwa 4/5 und 7/8 der Ausdehnung der Holzschwelle (10) in Verlaufsrichtung der Sackloch-Bohrungen (16) haben.

4. Imprägnierverfahren nach einem der Ansprüch2 1 bis3,
**dadurch gekennzeichnet, dass** die Sackloch-Bohrungen (16) einen Durchmesser zwischen 3 mm und 8 mm haben.

5. Imprägnierverfahren nach Anspruch 4,
**dadurch gekennzeichnet, dass** der Metallgehalt des Imprägniermittels 2-5%, bezogen auf das Metall ist.

6. Imprägnierverfahren nach Anspruch 4 oder 5,
**dadurch gekennzeichnet, dass** zwischen 30kg und 100kg Imprägniermittel pro Kubikmeter Holz eingebracht werden.

7. Imprägnierverfahren nach einem der Ansprüche 1 bis 6,
**dadurch gekennzeichnet, dass** ein Imprägniermittel verwendet wird, das außer Kupfer und/oder Zink als Seife von Fettsäuren aus naturstämmigen Ölen als Basis-Biozid ein oder mehrere Co-Biozide zur Erweiterung des Wirkungsspektrums und/oder zur Erhöhung der Wirkungstiefe aufweist.

8. Imprägnierte Holzschwelle (10), wobei die imprägnierte Holzschwelle (10) erste Bereiche aufweist, in denen Schlitze (13), die im Wesentlichen parallel zur Verlaufsrichtung der Holzfasern ausgerichtet und in Oberflächen (11, 12) der imprägnierten Holzschwelle (109) eingebracht sind, sind, so dass Holzfasern verschoben sind, wobei die imprägnierte Holzschwelle (10) zweite Bereiche aufweist, in denen Sackloch-Bohrungen (16), die von einer Seite der imprägnierten Holzschwelle (10) her eingebracht sind, sind, so dass Teile von Holzfasern durchtrennt sind und wobei die imprägnierte Holzschwelle (10) mit einem wasser- und lösemittelfreien, kupfer- und/oder zinkhaltigen Imprägniermittel, bei dem Kupfer und/oder Zink als Seife von Fettsäuren aus naturstämmigen Ölen, die oxydativ trocknen, als Biozid vorliegt, imprägniert ist.

9. Imprägnierte Holzschwelle (10) nach Anspruch 8,
**dadurch gekennzeichnet, dass** die Schlitztiefe mindestens 20 mm beträgt.

10. Imprägnierte Holzschwelle (10) nach Anspruch 8 oder 9,
**dadurch gekennzeichnet, dass** die Sackloch-Bohrungen (16) eine Tiefe von etwa 4/5 bis 7/8 der Ausdehnung der imprägnierten Holzschwelle (10) in Verlaufsrichtung der Sackloch-Bohrungen (16) haben.

11. Imprägnierte Holzschwelle (10) nach einem der Ansprüch2 8 bis 10,
**dadurch gekennzeichnet, dass** die Sackloch-Bohrungen (16) einen Durchmesser zwischen 3 mm und 8 mm haben.

12. Imprägnierte Holzschwelle (10) nach einem der Ansprüche 8 bis 11,
**dadurch gekennzeichnet, dass** der Kupfergehalt des Imprägniermittels 2-5%, bezogen auf das Metall ist.

13. Imprägnierte Holzschwelle (10) nach einem der Ansprüche 8 bis 12,
**dadurch gekennzeichnet, dass** das Imprägniermittel außer Kupfer und/oder Zink als Seife von Fettsäuren aus naturstämmigen Ölen als Basis-Biozid ein oder mehrere Co-Biozide zur Erweiterung des Wirkungsspektrums und/oder zur Erhöhung der Wirkungstiefe aufweist.

## Claims

1. Impregnating method for wooden sleepers (10), wherein the wooden sleeper (10) is subjected to a first mechanical treatment, specifically a slotted perforation of at least the four largest surfaces (11, 12) of the wooden sleeper (10), in which slots (13) are aligned substantially parallel to the running direction of the wood fibres, so that a displacement of wood fibres (10) is effected, wherein the wooden sleeper (10) is subjected to a second mechanical treatment, specifically an at least local introduction of blind holes (16) from at least one side of the wooden sleeper (10), substantially severing wood fibres, and wherein the impregnating agent used is an impregnating agent which is free of water and of solvent and contains copper and/or zinc, wherein copper and/or zinc is present as soap of fatty acids from naturally occurring oils as a biocide.

2. Impregnating method according to claim 2, **characterised in that** the slot depth is at least 20 mm.

3. Impregnating method according to claim 1 or 2, **characterised in that** the blind holes (16) have a depth between approximately 4/5 and 7/8 of the dimensions of the wooden sleeper (10) in the running direction of the blind holes (16).

4. Impregnating method according to claims 1 to 3, **characterized in that** the blind holes (16) have a diameter between 3 mm and 8 mm.

5. Impregnating method according to claim 4, **characterised in that** the metal content of the impregnating agent is 2-5%, based on the metal.

6. Impregnating method according to claim 4 or 5, **characterised in that** between 30 kg and 100 kg of impregnating agent are introduced per cubic meter of wood.

7. Impregnating method according to one of claims 1 to 6, **characterised in that** an impregnating agent is used which includes, in addition to copper and/or zinc a soap of fatty acids from naturally occurring oils as base biocide, one or more co-biocides for expanding the spectrum of activity and/or for increasing the depth of activity.

8. Impregnated wooden sleeper (10), wherein the impregnated wooden sleeper (10) has first regions, in which slots (13) which are aligned substantially parallel to the running direction of the wood fibres and are introduced in surfaces (11, 12) of the impregnated wooden sleeper (109), so that wood fibres are displaced, wherein the impregnated wooden sleeper (10) has second regions in which there are blind holes (16) introduced from one side of the impregnated wooden sleeper (10), so that parts of wood fibres are severed, and wherein the impregnated wooden sleeper (10) is impregnated with an impregnating agent which is free of water and of solvent and contains copper and/or zinc, wherein copper and/or zinc is present as soap of fatty acids from naturally occurring oils as a biocide.

9. Impregnated wooden sleeper (10) according to claim 8, **characterised in that** the slot depth is at least 20 mm.

10. Impregnated wooden sleeper (10) according to claim 8 or 9, **characterised in that** the blind holes (16) have a depth of approximately 4/5 and 7/8 of the dimensions of the impregnated wooden sleeper (10) in the running direction of the blind holes (16).

11. Impregnated wooden sleeper (10) according to one of claims 8 to 10, **characterised in that** the blind holes (16) have a diameter between 3 mm and 8 mm.

12. Impregnated wooden sleeper (10) according to one of claims 8 to 11, **characterised in that** the copper content of the impregnating agent 2-5%, based on the metal.

13. Impregnated wooden sleeper (10) according to one of claims 8 to 12, **characterised in that** an impregnating agent is used which includes, in addition to copper and/or zinc a soap of fatty acids from naturally occurring oils as base biocide, one or more co-biocides for expanding the spectrum of activity and/or for increasing the depth of activity.

## Revendications

1. Procédé d'imprégnation destiné à des seuils en bois (10) selon lequel le seuil en bois (10) est soumis à un premier traitement mécanique, à savoir une perforation de fentes dans au moins les quatre plus grandes surfaces (11, 12) du seuil en bois (10), les fentes (13) étant orientées essentiellement parallèlement à la direction d'extension des fibres de bois de façon à obtenir un décalage de fibres de bois (10), le seuil en bois (10) est soumis à un second traitement mécanique, à savoir l'insertion au moins locale de perçages borgnes (16) à partir d'au moins une face du seuil en bois (10), de sorte que des fibres de bois soient essentiellement sectionnées séparées, et en tant qu'agent d'imprégnation on utilise un agent d'imprégnation renfermant du cuivre et/ou du zinc exempt d'eau et de solvant, le cuivre et/ou le zinc étant présents sous la forme d'un biocide en tant que savon d'acides gras issus d'huiles d'origine naturelle séchant par oxydation.

2. Procédé d'imprégnation conforme à la revendication 2,
**caractérisé en ce que**
la profondeur des fentes est d'au moins 20 mm.

3. Procédé d'imprégnation conforme à la revendication 1 ou 2,
**caractérisé en ce que**
les perçages borgnes (16) ont une profondeur comprise entre environ 4/5 et 7/8 de l'étendue du seuil en bois (10) dans la direction d'extension de ces perçages borgnes (16).

4. Procédé d'imprégnation conforme à l'une des revendications 1 à 3,
**caractérisé en ce que**
les perçages borgnes (16) ont un diamètre compris entre 3 mm et 8 mm.

5. Procédé d'imprégnation conforme à la revendication 4,
**caractérisé en ce que**
la teneur en cuivre de l'agent d'imprégnation est égale à 2 à 5% par rapport au métal.

6. Procédé d'imprégnation conforme à la revendication 4 ou 5,
**caractérisé en ce qu'**
on met en œuvre entre 30 kg et 100 kg d'agent d'imprégnation par mètre cube de bois.

7. Procédé d'imprégnation conforme à l'une des revendications 1 à 6,
**caractérisé en ce qu'**
on utilise un agent d'imprégnation renfermant, outre du cuivre et/ou du zinc présent sous la forme d'un biocide de base en tant que savon d'acides gras issus d'huiles d'origine naturelle, un ou plusieurs co-biocide(s) permettant d'élargir le spectre d'action et/ou d'augmenter la profondeur d'action.

8. Seuil en bois imprégné (10) comprenant des premières zones dans lesquelles sont présentes des fentes (13) qui sont orientées essentiellement parallèlement à la direction d'extension des fibres de bois, et sont insérées dans les surfaces (11, 12) du seuil en bois imprégné (109) de façon à décaler des fibres de bois, ainsi que des secondes zones dans lesquelles insérés des perçages borgnes (10) à partir d'une face du seuil en bois (16) imprégné de sorte que des parties des fibres de bois soient sectionnées, et le seuil de bois (10) imprégné étant imprégné avec un agent d'imprégnation exempt d'eau et de solvant refermant du cuivre et/ou du fer dans lequel le cuivre et/ou le fer sont présents sous la forme d'un biocide en tant que savon d'acides gras issus d'huiles d'origine naturelle séchant par oxydation.

9. Seuil en bois imprégné (10) conforme à la revendication 8,
**caractérisé en ce que**
la profondeur des fentes est d'au moins 20 mm.

10. Seuil en bois imprégné (10) conforme à la revendication 8 ou 9,
**caractérisé en ce que**
les perçages borgnes (16) ont une profondeur d'environ 4/5 à 7/8 de l'extension du seuil en bois imprégné (10) dans la direction d'extension de ces perçages borgnes (16).

11. Seuil en bois imprégné (10) conforme à l'une des revendications 8 à 10,
**caractérisé en ce que**
les perçages borgnes (16) ont un diamètre compris entre 3 mm et 8 mm.

12. Seuil en bois imprégné (10) conforme à l'une des revendications 8 à 11,
**caractérisé en ce que**
la teneur en cuivre de l'agent d'imprégnation est égale à 2 à 5 % par rapport au métal.

13. Seuil en bois imprégné (10) conforme à l'une des revendications 8 à 12,
**caractérisé en ce que**
l'agent d'imprégnation renferme, outre du cuivre et/ou du zinc sous la forme de savon d'acides gras issus d'huiles d'origine naturelle constituant un biocide de base, un ou plusieurs co-biocide(s) permettant d'élargir le spectre d'action et/ou d'augmenter la profondeur d'action.
